(19) Europäisches Patentamt
European Patent Office
Office européen des brevets

(11) **EP 4 084 284 A1**

(12) **EUROPEAN PATENT APPLICATION**

(43) Date of publication:
**02.11.2022 Bulletin 2022/44**

(21) Application number: **21382375.0**

(22) Date of filing: **29.04.2021**

(51) International Patent Classification (IPC):
*H02J 50/20* (2016.01)

(52) Cooperative Patent Classification (CPC):
**H02J 50/20**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mawacs Tecnologia & Sistemas, SL 08520 Les Franqueses del Vallès (ES)**

(72) Inventor: **BATLLES TORRAS, Miquel 08520 Les Franqueses del Vallès (ES)**

(74) Representative: **Juncosa Miró, Jaime et al Torner, Juncosa i Associats, S.L. C/Pau Claris, 108, 1r 1a 08009 Barcelona (ES)**

(54) **ENERGY SAVING SYSTEM FOR AN ELECTRICAL INSTALLATION**

(57) The system (20) comprises an energy saving device (10) connected to power supply lines (25), wherein the device (10) comprises a housing (6) and a cover (11) with a coating of ceramic material (16) on the inner faces thereof, electrically conductive bars (1) in an inner cavity (14) of the housing connected to respective AC power supply lines; an intermediate plate (15), spaced apart from the cover and from the side walls and separated from the electrically conductive bars, and an accumulator layer (18) for accumulating magnetic field, below the electrically conductive bars. The device includes permanent magnets fixed to the bottom wall (12) and an amplifier layer (19) which is superimposed on said accumulator layer and in which said electrically conductive bars are embedded, said amplifier layer comprising a dielectric polymer gel with a 1.5% to 2% contribution of graphite particles. The accumulator layer comprises poly(methyl methacrylate) (PMMA) and a 1% to 1.5% contribution of graphite particles.

Fig. 1

EP 4 084 284 A1

## Description

Field of the Art

The present invention is comprised in the sector of electric supply installations, particularly, of a manufacturing site or the like, and relates to a system providing reduced electrical energy consumption based on a reduction in the impedance of the installation, when the system connected to power supply lines modifies the conditions in which the electric current circulates through said power supply lines.

The system comprises an energy saving device connected to power supply lines, wherein said energy saving device is an apparatus configured for saving electricity consumptions in any electrical installation, either a three-phase industrial electrical installation or a single-phase home electrical installation. The energy saving device achieves saving through passive means, without active electronics which may be detrimental to the operation of the components and/or machines installed in the same network, as well as assuring the operation and service life of the device.

State of the Art

The energy of a mains power source is represented by the energy of the electrons flowing through a conductive cable. According to research conducted in this field, it was found that electrical energy is made up of a flow of rotating electromagnetic waves and of electrons vibration. Based on this fact, it has been proven that a power line can absorb rotating electromagnetic waves, and when a line suitable for conducting electrical energy is located within the field of influence of the radiation from a radiating body radiating in the far infrared spectrum (with wavelengths between 40 and 350 micra), an absorption force is generated, whereby rotating electromagnetic waves generated by the radiating body are moved into the power line, causing an alignment of the flow of electrons which determines a lower resistance to current circulation.

Based on this principle, several patents proposing electrical energy saving devices are known.

In that sense, document KR100419312B1 describes an electrical energy saving device including a housing made of metal or plastic and coated on the inner surface thereof with a ceramic layer mainly formed of sericite suitable for generating rotating electromagnetic waves, which are confined in the space closed by a cover and with an inner cover plate, and the transfer of rotating electromagnetic waves to the outside is prevented. The device includes in said space electrically conductive bars which are supported on insulation blocks and separated from one another for absorbing the rotating electromagnetic waves emanated from the ceramic layer and thereby performing a resonance absorption function. Electric cables connect said electrically conductive bars to power supply lines.

Document US9698627B2 describes a device for optimizing electrical energy with a sealed housing made of plastic or metal material; an electrically conductive bar placed inside the housing and respectively connected to power lines so as to accumulate magnetic energy generated in an internal polymer-clay nanocomposite; electric cables which are power lines for transmitting the magnetic energy stored in the electrically conductive bar to the outside of the housing; a polymer-clay nanocomposite filling the lower part of the inside of the housing such that the electrically conductive bar is submerged therein, the housing being internally coated with a ceramic layer to promote the electromagnetic interaction of said ceramic in the upper space portion of the polymer-clay nanocomposite.

Document KR100939757 B1 describes an apparatus for saving electrical energy which improves electron flow and movement using a mixture of tourmaline mineral and permanent magnet powder, based on the same principles as the two patent documents mentioned above.

Document KR101581027 B1 discloses an energy saving apparatus which provides improved electron density for reducing electrical energy consumption by means of increasing the electron density of a conductive cable through which an AC current flows, inducing the direction as a result of the magnetic force of a permanent magnet included in the housing of the apparatus.

The present invention relates to a system which uses an energy saving device having many aspects in common with the device described in document KR100419312B1, but in which some new components, i.e., an additional amplifier layer, have been included, and the characteristics of the accumulator layer of the magnetic fields modified to improve performance in terms of energy saving and to increase the stability and durability of the assembly.

Brief Description of the Invention

The invention proposes a system integrating an energy saving device connected to power supply lines wherein, as is known, the mentioned energy saving device comprises:

- a housing provided with a cover, side walls, and a bottom wall, wherein each side wall, bottom wall, and cover has on the inner face thereof a coating of ceramic material, configured for providing a radiating surface radiating in the infrared spectrum with wavelengths between 40 and 350 micra;

- two or more electrically conductive bars arranged in the inner cavity, attached at the ends thereof to electrically insulating supports and connected by electric cables to respective AC power supply lines, allowing electrons to flow towards said power supply lines;

- an intermediate plate with a flat configuration supported on columns perpendicular to the bottom of the housing, said intermediate plate being arranged in the inner cavity with the main plane thereof parallel to the direction of conduction spaced apart from the cover and also separated from the electrically conductive bars, and the side edges of said intermediate plate being spaced apart from the side walls; and

- an accumulator layer for accumulating said magnetic fields, formed by a polymer compound which occupies an inner cavity demarcated between said bottom and side walls, with a surface thereof being at a level lower than said electrically conductive bars.

The mentioned housing and its cover are metal parts made of steel with a low carbon content and coated with ceramic layers and said ceramic coating includes microspheres in some parts.

The energy saving device of the system of this invention includes as additional components:

- permanent magnets fixed to the bottom wall, forming one or more groups, configured for generating transverse magnetic fields with respect to the electrically conductive bars; and

- an amplifier layer superimposed on the mentioned accumulator layer, such that the electrically conductive bars are embedded in said amplifier layer.

In one embodiment, said amplifier layer comprises a dielectric polymer gel with a 1.5% to 2% contribution of graphite particles, configured for amplifying the mentioned magnetic field.

According to the proposal of this invention, the mentioned accumulator layer is formed by a chemical compound comprising poly(methyl methacrylate) (PMMA) and a 1% to 1.5% contribution of graphite particles.

Furthermore, the mentioned intermediate plate is provided, on its upper face facing the cover, with a layer of spherified ceramic material suitable for increasing the effect of reflecting and distributing the magnetic fields generated inside the housing closed with the cover.

The mentioned magnets are ferritic and neodymium magnets, and their function is to induce positive/negative poles in each transmission bar, for the purpose of generating and amplifying the binding of electrons and injecting them in the network.

Brief Description of the Figures

The foregoing and other advantages and features will be better understood based on the following detailed description of an embodiment in reference to the attached drawings which must be interpreted in an illustrative and non-limiting manner, in which:

Figure 1 is a perspective view of the device which is part of the energy saving system of the invention showing the electrically conductive bars and including a partial section of the cover, intermediate plate, and the accumulator and amplifier layers.

Figure 2 is a perspective view illustrating the different elements of the energy saving device located in the lower part of the housing, particularly showing the arrangement of the permanent magnets used.

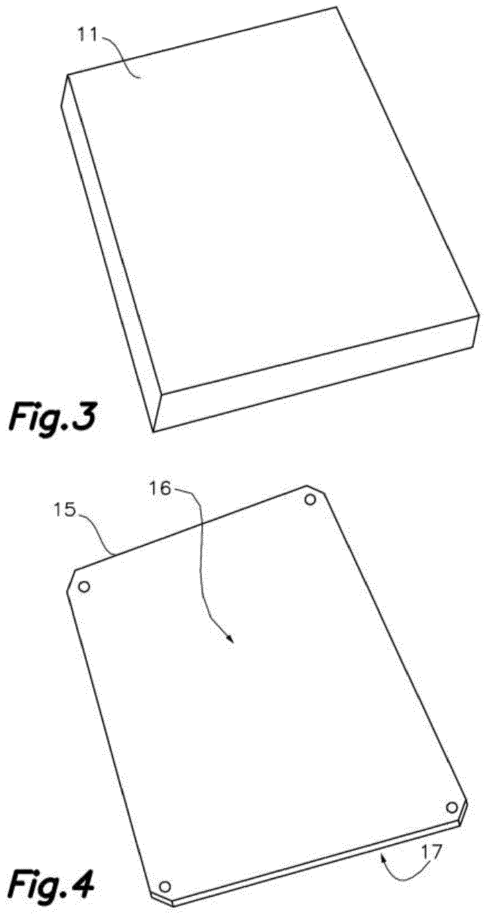

Figure 3 is a perspective view of the cover closing the housing of the energy saving device.

Figure 4 illustrates the perspective view of the intermediate plate arranged between the electrically conductive bars and the cover with different ceramic coatings on the two faces thereof.

Figure 5 is a perspective view of the inside of the housing in which the details of the anchoring of the housing, as well as the ends of the plate support columns, can be seen.

Figure 6 shows the connection of the energy saving device to the power supply lines of an electrical installation.

Figure 7 is a schematic elevational view of the energy saving device which shows most of its components and allows viewing the different elements of the invention, particularly the amplifier layer in which the electrically conductive bars are submerged.

Figure 8 is a graph showing the incidence of the application of the energy saving system in an electrical installation by means of a series of consumption measurements over a time period (several successive days). The point at which the system has been disconnected from the electrical installation has been indicated in the graph with an arrow.

Detailed Description of an Embodiment

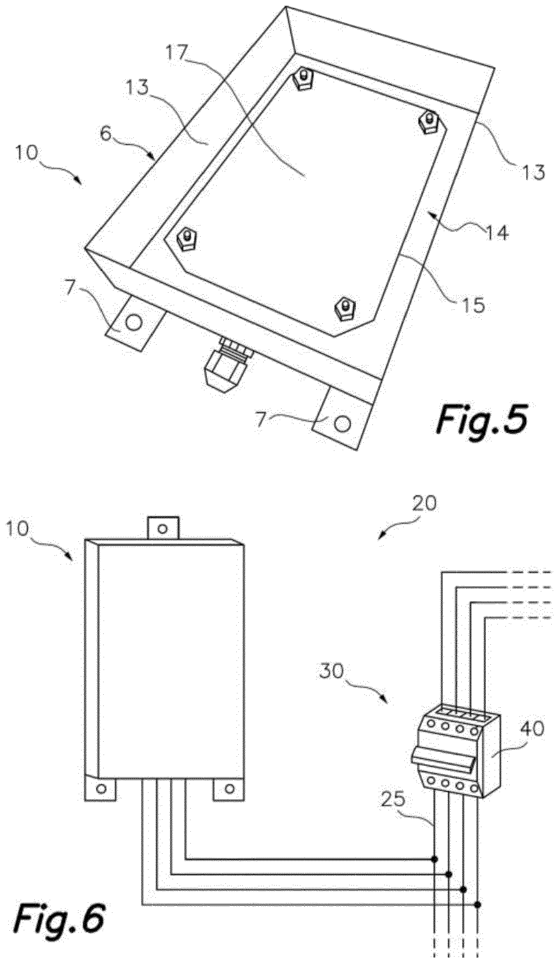

In reference to Figure 6, the energy saving system 20 for an electrical installation 30 of the invention comprises an energy saving device 10 connected to power supply lines 25 equipped with an electrical protection device 40. The device 10 must be installed insulated from an earth connection.

According to the configuration known in the state of the art, the energy saving device 10 comprises:

- a housing 6 with a cover 11, side walls 13, and a bottom wall 12, wherein each side wall 13, bottom wall 12, and cover 11 has an inner face with a coating of ceramic material 16, configured for providing a radiating surface radiating in the infrared spectrum with wavelengths between 40 and 350 micra;

- at least two electrically conductive bars 1 arranged in the inner cavity 14, attached at the ends thereof to electrically insulating supports 2 and connected by electric cables 8 to respective AC power supply lines 25, allowing electrons to flow towards the power supply lines 25;

- a plate 15 with a flat configuration, supported on columns 9, arranged in the inner cavity 14 with the main plane thereof parallel to the direction of conduction, and spaced apart from the cover 11 and separated from the electrically conductive bars 1, the side edges of said plate 15 being spaced apart from the side walls 13; and

- an accumulator layer 18 for accumulating said magnetic fields, formed by a polymer compound which occupies an inner cavity 14 demarcated between said bottom 12 and side walls 13, with a surface thereof being at a level lower than said electrically conductive bars 1;

According to the principles of the present invention, the energy saving device 10 further comprises:

- permanent magnets 3A, 3B fixed to the bottom wall 12, configured for generating transverse magnetic fields with respect to the electrically conductive bars 1; and

- an amplifier layer 19 superimposed on said accumulator layer 18, in which said electrically conductive bars 1 are embedded, said second amplifier layer 19 comprising a dielectric polymer gel with a 1.5% to 2% contribution of graphite particles, configured for amplifying the mentioned magnetic field generated in the accumulator layer 18.

According to this invention, the mentioned accumulator layer 18 is formed by a chemical compound comprising poly(methyl methacrylate) (PMMA) and a 1% to 1.5% contribution of graphite particles. The entire mentioned accumulator layer can thus be charged and magnetized, eliminating electrical transmission and short-circuiting.

Moreover, the mentioned intermediate plate 15 comprises a core made of grain-oriented Fe-Si steel sheet of between 1 and 4 mm thick and is provided, on its upper face facing the cover 11, with a layer of spherified ceramic material 17 suitable for increasing the effect of reflecting and distributing the magnetic fields generated inside the housing 6 closed with the cover 11.

In one embodiment, the side walls 13, the cover 11, and the bottom 12 of the housing 6 are metal parts made of steel, externally coated with oven-baked paint.

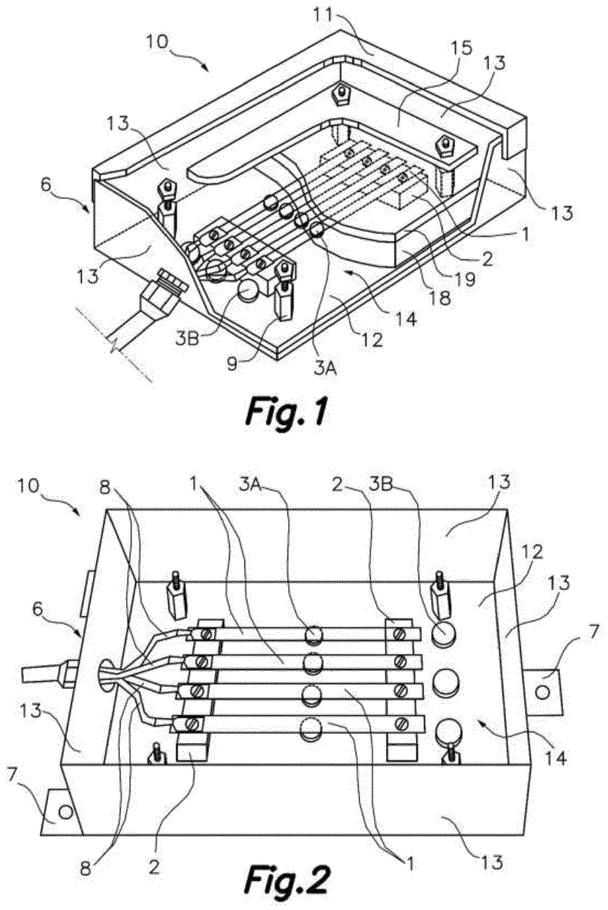

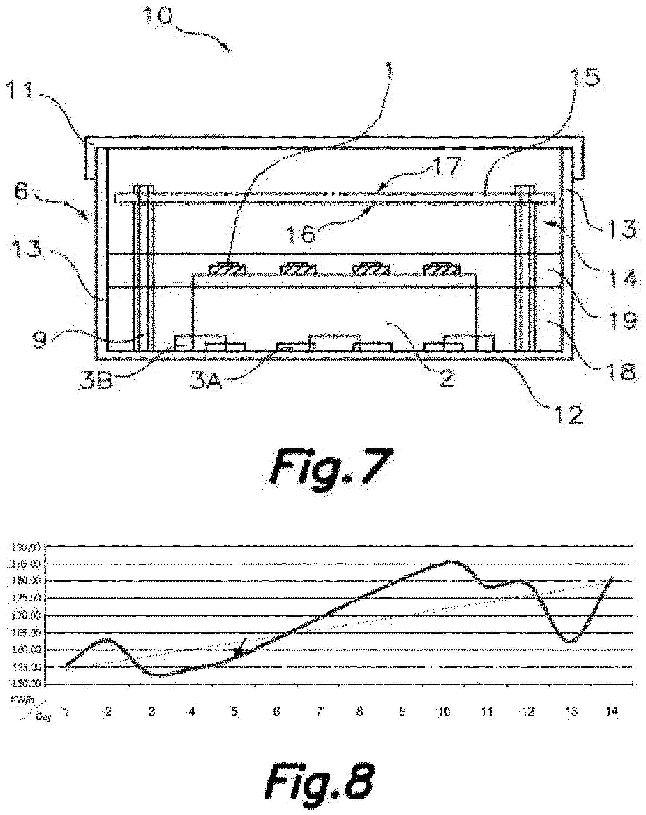

As can be seen in Figures 1, 2, and 7, the energy saving device 10 comprises four electrically conductive copper bars 1 with a flat configuration, with a purity comprised between 90% and 100%, and preferably 99.9%, connected to each of the phases of a three-phase power supply lines 25 and to the neutral conductor.

If the installation is a single-phase installation, only two bars will be used.

In an embodiment of the energy saving device 10, said device comprises a housing 6, a cover 11, and a plate 15 with a rectangular layout and the dimensions of length (x), width (y), and height (z) of the plate 15, the accumulator layer 18, and the amplifier layer 19 satisfy the following ratio:

$$z = y \cdot \phi$$

$\phi$ being the golden ratio defined by the expression:

$$\phi = \frac{1 + \sqrt{5}}{2}$$

It can be seen in Figure 2 that the mentioned permanent magnets include, in this embodiment, two parallel spaced-apart alignments of permanent magnets, a first of said alignments being located below the electrically conductive bars 1 and a second alignment of permanent magnets being located outside the area covered by the electrically conductive bars 1.

The mentioned first row of permanent magnets comprises four permanent neodymium magnets 3A with a cylindrical configuration and said second row of permanent magnets comprises three permanent ferritic magnets 3B.

Although the mentioned first and second rows of permanent magnets have been depicted perpendicular to the electrically conductive bars 1, other orientations would be possible.

In one embodiment, the coating of ceramic material 16 of the inner faces of the side walls 13, the intermediate plate 15, the bottom wall 12, and the cover 11 of the housing of the energy saving device 10 is made of an epoxy-coated, abrasion-resistant, low-friction material.

## Claims

1. An energy saving system (20) for an electrical installation (30), comprising an energy saving device (10) connected to power supply lines (25), wherein the device (10) comprises:

   - a housing (6) with a cover (11), side walls (13), and a bottom wall (12), wherein each side wall (13), bottom wall (12), and cover (11) has an inner face with a coating of ceramic material

(16), configured for providing a radiating surface radiating in the infrared spectrum with wavelengths between 40 and 350 micra;

- at least two electrically conductive bars (1) arranged in the inner cavity (14), attached at the ends thereof to electrically insulating supports (2) and connected by electric cables (8) to respective AC power supply lines (25), allowing electrons to flow towards the power supply lines (25);

- an intermediate plate (15) with a flat configuration supported on columns (9), arranged in the inner cavity (14) with the main plane thereof parallel to the direction of conduction, and spaced apart from the cover (11) and separated from the electrically conductive bars (1), the side edges of said intermediate plate (15) being spaced apart from the side walls (13); and

- an accumulator layer (18) for accumulating said magnetic fields, formed by a polymer compound which occupies an inner cavity (14) demarcated between said bottom (12) and side walls (13), with a surface thereof being at a level lower than said electrically conductive bars (1); **characterized in that** it further includes:

- permanent magnets fixed to the bottom wall (12), configured for generating transverse magnetic fields with respect to the electrically conductive bars (1); and
- an amplifier layer (19) superimposed on said accumulator layer (18), in which said electrically conductive bars (1) are embedded, said amplifier layer (19) comprising a dielectric polymer gel with a 1.5% to 2% contribution of graphite particles, configured for amplifying the mentioned magnetic field;

wherein said accumulator layer (18) is formed by a chemical compound comprising poly(methyl methacrylate) (PMMA) and a 1% to 1.5% contribution of graphite particles, and
wherein the mentioned intermediate plate (15) is provided, on its upper face facing the cover, (11), with a layer of spherified ceramic material (17) suitable for increasing the effect of reflecting and distributing the magnetic fields generated inside the housing (6) closed with the cover (11).

2. The system (20) according to claim 1, which comprises four electrically conductive copper bars with a flat configuration, with a purity comprised between 90% and 100%, and preferably of 99.9%, connected to each of the phases of a three-phase power supply lines (25) and to the neutral conductor.

3. The system (20) according to claim 1 or 2, wherein the housing (6), the cover (11), and the plate (15) have a rectangular layout and the dimensions of length (x), width (y), and height (z) of the plate (15), the accumulator layer (18), and the amplifier layer (19) satisfy the following ratio:

$$z = y \cdot \phi$$

$\phi$ being the golden ratio defined by the expression:

$$\phi = \frac{1 + \sqrt{5}}{2}$$

4. The system (20) according to claim 2, **characterized in that** it includes two parallel spaced-apart alignments of permanent magnets, a first of said alignments being located below the electrically conductive bars (1) and a second alignment of permanent magnets being located outside the area covered by the electrically conductive bars (1).

5. The system (20) according to claim 4, wherein said first row of permanent magnets comprises four permanent neodymium magnets (3A) with a cylindrical configuration and said second row of permanent magnets comprises three permanent ferritic magnets (3B).

6. The system (20) according to any one of the preceding claims, wherein the side walls (13), the cover (11), and the bottom (12) of the housing (6) are metal parts made of steel, externally coated with oven-baked paint.

7. The system (20) according to any one of the preceding claims, wherein the intermediate plate (15) comprises a core made of grain-oriented Fe-Si steel sheet of between 1 and 4 mm thick.

8. The system (20) according to claim 1, wherein said coating of ceramic material (16) of the inner faces of the side walls (13), the intermediate plate (15), the bottom wall (12), and the cover (11) is made of an epoxy-coated, abrasion-resistant, low-friction material.

Fig.1

Fig.2

Fig.3

Fig.4

Fig.5

Fig.6

**Fig.7**

**Fig.8**

Europäisches
Patentamt

European
Patent Office

Office européen
des brevets

## EUROPEAN SEARCH REPORT

Application Number

EP 21 38 2375

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/061097 A1 (KIM EUN-KOOK [KR]) 24 July 2003 (2003-07-24) * the whole document * ----- | 1-8 | INV. H02J50/20 |

TECHNICAL FIELDS
SEARCHED       (IPC)

H02J

The present search report has been drawn up for all claims

| Place of search | Date of completion of the search | Examiner |
|---|---|---|
| Munich | 20 October 2021 | Castagné, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ...............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 38 2375

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2021

| Patent document cited in search report | | Publication date | Patent family member(s) | | Publication date |
|---|---|---|---|---|---|
| WO 03061097 | A1 | 24-07-2003 | AU | 2003235608 A1 | 30-07-2003 |
| | | | CN | 1554142 A | 08-12-2004 |
| | | | KR | 20030062710 A | 28-07-2003 |
| | | | WO | 03061097 A1 | 24-07-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100419312 B1
- US 9698627 B2

- KR 100939757 B1
- KR 101581027 B1